# EUROPÄISCHE PATENTSCHRIFT

(11) **EP 1 518 468 B1**
(45) Veröffentlichungstag und Bekanntmachung des Hinweises auf die Patenterteilung: **07.03.2007**
(21) Anmeldenummer: 04020077.6
(22) Anmeldetag: 24.08.2004
(51) Int. Cl.: A24C 5/32, F16B 1/00, B23B 31/107, A24C 5/47

(54) **Fördertrommel mit Spanneinrichtung**
Conveying drum with clamping device
Tambour de transfert avec dispositif de serrage

(30) Priorität: 23.09.2003 DE 10344381
(43) Veröffentlichungstag der Anmeldung: 30.03.2005
(73) Patentinhaber: Hauni Maschinenbau AG, 21033 Hamburg (DE)
(72) Erfinder: Jendrian, Torsten, 22111 Hamburg (DE)
(74) Vertreter: Seemann, Ralph

(56) Entgegenhaltungen:
- EP-A- 0 577 061
- EP-A- 0 674 853
- US-A- 4 746 006
- IMAO INDUSTRIAL SUPPLIES: "Tooling Components"[Online] 15. August 2003 (2003-08-15), Seiten 1-2, XP002313543 Gefunden im Internet: URL:http://web.archive.org/web/20030815061 553/http://www.imao-ind.com/tooling.htm> [gefunden am 2005-01-14]

## Beschreibung

Die Erfindung betrifft eine Einrichtung zum Transportieren von Artikeln der tabakverarbeitenden Industrie, insbesondere Zigaretten, mit einem drehend angetriebenen Förderelement, vorzugsweise Trommel, und einem Träger, wobei das Förderelement mittels einer Spanneinrichtung mit dem Träger lösbar verbindbar ist. Darüber hinaus betrifft die Erfindung die Verwendung einer Spanneinrichtung in einer derartigen Einrichtung sowie eine Maschine der tabakverarbeitenden Industrie, insbesondere Filteransetzmaschine.

Zum Transportieren von stabförmigen Rauchartikeln, Filtern, Filterstäben, Tabakstöcken bzw. Zigaretten oder Filterzigaretten, werden Fördertrommeln beispielsweise in einer Filteransetzmaschine eingesetzt. Diese Fördertrommeln bestehen aus einem ortsfesten Steuerkörper, auf dem ein von einer Antriebswelle rotierend angetriebener Trommelkörper angeordnet ist. Bei einem Formatwechsel an der Filteransetzmaschine werden die Trommelkörper von den Steuerkörpern abgezogen, wobei hierfür vom Bedienungspersonal mehrere Schrauben gelöst werden, um den Trommelkörper vom Steuerkörper abzunehmen und einen neuen Trommelkörper z.B. für Zigaretten mit einem anderen Durchmesser oder einer anderen Länge aufzubringen.

In der Patentschrift US-4,438,774 ist eine Fördertrommel für Zigaretten beschrieben, bei der der Trommelkörper mittels einer Drehschraube auf der Rotationswelle befestigt ist. Um den Trommelkörper auszutauschen wird die Halteschraube manuell gelöst, so dass der Trommelkörper vom Steuerkörper entfernt werden kann.

Aus DE-A-101 16 684 ist eine Vorrichtung mit einem drehend angetriebenen Aggregat, insbesondere Trommel, offenbart, bei der mittels umlaufender Spannringe eine Innennabe und eine Außennabe miteinander verbunden werden. Durch einen axial gerichteten Druck werden die Spannringe in eine Spannstellung verformt, so dass eine Verbindung zwischen der Innennabe und der Außennabe hergestellt wird. Insgesamt ist dieses mechanische Spannorgan sehr aufwendig in seiner Konstruktion.

Ausgehend von diesem Stand der Technik ist es daher Aufgabe der vorliegenden Erfindung, eine Trommel bereitzustellen, bei der ein schneller Wechsel eines Trommelkörpers möglich ist, wobei der konstruktive Aufwand gering gehalten werden soll.

Gelöst wird diese Aufgabe durch eine Einrichtung zum Transportieren von Artikeln der tabakverarbeitenden Industrie, insbesondere Zigaretten, mit einem drehend angetriebenen Förderelement, vorzugsweise Trommel, und einem Träger, wobei das Förderelement mittels einer Spanneinrichtung mit dem Träger lösbar verbindbar ist, die dadurch weitergebildet ist, dass die Spanneinrichtung wenigstens ein Treibglied aufweist, so dass durch eine Bewegung des Treibglieds wenigstens zwei, vorzugsweise drei, Halteglieder quer zur Bewegungsrichtung des Treibglieds ihre relative Lage ändern. Durch die erfindungsgemäße mechanische Spanneinrichtung wird eine Spanneinrichtung geschaffen, bei der auf einfache Weise und mit wenigen Handgriffen das Förderelement und der Träger sicher miteinander verbunden werden. Durch die Bewegung eines Treibgliedes werden die Halteglieder als Verhakungsmittel quer zur Bewegungsrichtung des Halteglieds bewegt, so dass das Förderelement und der Träger miteinander verspannt werden. Hierdurch entsteht eine sehr rationell arbeitende Spanneinrichtung. Außerdem gewährleistet diese Spanneinrichtung, dass sehr hohe Kräfte zur Verspannung aufgebaut werden.

Zur Verspannung der Bauteile sind die Halteglieder in einer Aufnahmebuchse des Trägers und/oder des Förderelements einbringbar.

Bevorzugterweise sind das wenigstens eine Treibglied und die wenigstens zwei Halteglieder in einem Gehäuse angeordnet. Hierdurch ergibt sich eine einfache Handhabung der Spanneinrichtung.

Darüber hinaus ist es vorteilhaft, wenn das Gehäuse als Zylinder, insbesondere Spannzylinder, ausgebildet ist.

Insbesondere sind als Treibglied ein Bolzen, insbesondere Schraubbolzen, und/oder eine Kugel vorgesehen.

In einer bevorzugten Weiterbildung sind als Halteglieder Kugeln vorgesehen.

Eine vereinfachte Handhabung ergibt sich, wenn die Spanneinrichtung rotationssymmetrisch ausgebildet ist.

Die mechanischen Belastungen werden verringert, wenn die Spanneinrichtung konzentrisch zur Drehachse des Förderelements angeordnet ist.

Zur manuellen Handhabung ist die Spanneinrichtung mit einem mit einem Greifknopf versehen.

Darüber hinaus ist es vorteilhaft, wenn das wenigstens eine Treibglied oder der Greifknopf mit einer Ausnehmung zur Aufnahme eines Drehwerkzeugs, insbesondere Sechskantschlüssel, versehen ist. Dadurch ist es möglich, dass eine höhere Spannkraft in der Spanneinrichtung erzeugt wird.

Um an bestehenden Einrichtungen bzw. Fördertrommeln die Spanneinrichtung nachzurüsten, ist vorteilhafterweise die Spanneinrichtung als Adapter ausgebildet. Hierbei wird die Spanneinrichtung mit einem Trommelkörper verbunden.

Ferner wird die Aufgabe gelöst mittels einer Maschine der tabakverarbeitenden Industrie, insbesondere Filteransetzmaschine, die mit einer erfindungsgemäßen Einrichtung ausgestattet ist.

Darüber hinaus wird die Aufgabe gelöst durch eine Verwendung einer Spanneinrichtung in einer voranstehend beschriebenen Einrichtung zum Transportieren von Artikeln der tabakverarbeitenden Industrie, insbesondere Zigaretten. Zur Vermeidung von Wiederholungen wird auf die voranbeschriebene erfindungsgemäße Spanneinrichtung explizit verwiesen.

Die Erfindung wird nachstehend ohne Beschränkung des allgemeinen Erfindungsgedankens anhand von Ausführungsbeispielen unter Bezugnahme auf die beigefügten schematischen Zeichnungen exemplarisch beschrieben, auf die im Übrigen bezüglich der Offenbarung aller im Text nicht näher erläuterten erfindungsgemäßen Einzelheiten ausdrücklich verwiesen wird. Es zeigen:
- Fig.1: ausschnittsweise eine Fördertrommel im Querschnitt mit einer Spanneinrichtung, wobei die Spanneinrichtung als Adapter ausgebildet ist;
- Fig. 2: ausschnittsweise eine weitere Ausführungsform einer Spanneinrichtung an einer Fördertrommel und
- Fig.3: eine Fördertrommel mit einer weiteren, erfindungsgemäßen Spanneinrichtung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird und lediglich Abweichungen der in diese Figuren dargestellten Ausführungsbeispiele gegenüber dem ersten Ausführungsbeispiel erläutert werden.

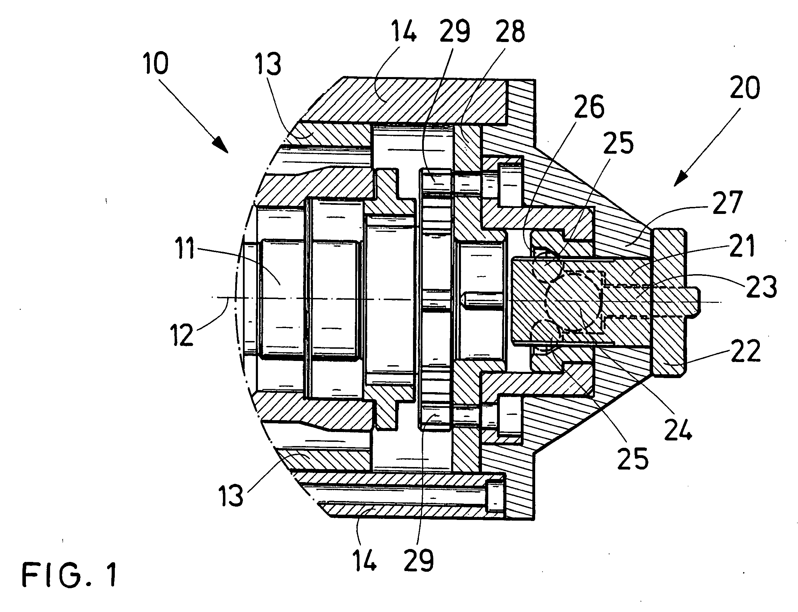

In Fig. 1 ist im Querschnitt eine Fördertrommel einer Maschine der tabakverarbeitenden Industrie, insbesondere Filteransetzmaschine, im Ausschnitt gezeigt. Eine Filteransetzmaschine ist beispielsweise in Fig. 1 der Patentschrift US-6,064,032 (entspricht DE-A-197 22 799) gezeigt, auf die ausdrücklich verwiesen wird.

In Fig. 1 ist das von der Maschinenseite abgewandte Ende einer Fördertrommel 10 dargestellt. Die Fördertrommel 10 verfügt über eine Antriebswelle 11, mit einer Rotationsachse 12. Ferner verfügt die Fördertrommel 10 über einen Steuerkörper 13, der fest mit der Maschinenseite der Filteransetzmaschine verbunden ist. Der Steuerkörper 13 ist umgeben, von einem Trommelkörper 14, der mittels einer Spanneinrichtung 20 mit der Antriebswelle 11 verbunden ist.

Die Spanneinrichtung 20 ist bei dieser Ausführungsform in Fig. 1 als Adapter ausgebildet, so dass bisherige Trommelkörper mit einer erfindungsgemäßen Spanneinrichtung 20 nachgerüstet werden können.

Die Spanneinrichtung 20 bildet einen Deckel, der fest mittels einer Schraubverbindung mit dem Trommelkörper 14 verbunden ist. Außerdem verfügt die Spanneinrichtung 20 über einen Spannzylinder 21, der auf der nach außen gerichteten Seite einen Greifknopf 22 aufweist. Am Greifknopf 22 ist ein Drehbolzen 23 angeordnet, der in einer zylindrischen Durchgangsbohrung des Spannzylinders 21 drehbar angeordnet ist. Ferner verfügt der Spannzylinder 21 im Inneren über eine Kugel 24, die mittels des Drehbolzens 23 verschoben wird. Darüber hinaus sind am Umfang der zentralen Kugel 24 kleinere Kugeln 25 verteilt angeordnet, die durch eine lineare Bewegung der zentralen Kugel 24 nach außen, d.h. quer zur Bewegungsrichtung der Kugel 24 bewegt bzw. gedrückt werden. Dadurch drücken die äußeren Kugeln 25 gegen einen Konus einer Aufnahmebuchse 26 und verspannen den äußeren Deckel 27 der Spanneinrichtung 20 mit einer Adapterscheibe 28, die im Inneren der Trommel 10 mit der Antriebswelle 11 über Schrauben 29 verbunden ist.

Es hat sich in der Praxis gezeigt, dass für eine derartige erfindungsgemäße Spanneinrichtung die sogenannten "Ball Lock"-Positionier- und Spannsysteme der Firmen norelem, Markgröningen, Deutschland, sowie der Firma Jergens Inc, Cleveland, Ohio, USA, sich bewährt haben. Diese Positionier- und Spannsysteme ermöglichen ein genaues und schnelles Positionieren und Befestigen von Bauteilen, wobei die Bauteile miteinander unter Aufbringung einer hohen Spannkraft miteinander verspannt werden. Hierdurch findet eine reibschlüssige Verbindung der Antriebswelle mit dem Trommelkörper statt. Insgesamt werden dadurch hohe Haltekräfte und ein schneller und einfacher Wechsel des Trommelkörpers realisiert. Der schnelle Wechsel wird dadurch unterstützt, dass nur eine zentrale Schraube gelöst bzw. angezogen werden muss. Die Schraube 23 des Spannzylinders 21 bzw. der Drehbolzen 23 ist mit wenigen Umdrehungen festgezogen und gelöst, wobei zur einfachen Handhabung der Drehbolzen 23 der Spanneinrichtung 20 über eine Aufnahme für einen Sechskantschlüssel oder Inbusschlüssel verfügt. Der Spannzylinder 21 ist rotationssymmetrisch ausgebildet. Unter Verwendung der oben genannten Spannsysteme verfügt der Spannzylinder über drei kleinere Kugeln (Bezugszeichen 25) auf dem Umfang des Spannzylinders, die gleichmäßig auf dem Umfang verteilt sind.

Die Funktionsweise einer derartigen Spanneinrichtung mit Kugeln ist beispielsweise in der Patentschrift US-3,498,653 offenbart.

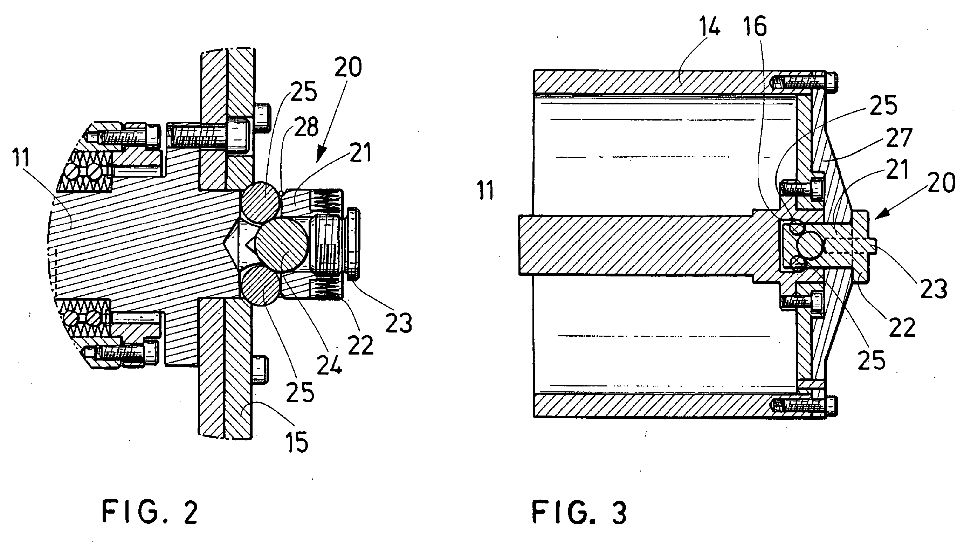

In Fig. 2 ist im Querschnitt ausschnittsweise eine weitere Ausgestaltung einer Spanneinrichtung 20 an einer Fördertrommel dargestellt. Die Spanneinrichtung 20 ist am Ende der Antriebswelle 11 ausgebildet, so dass Antriebswelle 11 und Spanneinrichtung 20 als ein einstückiges Bauteil ausgebildet sind. Um einen Deckel 15 der Trommel reibschlüssig mit der Welle 11 zu verbinden, drücken die Kugeln 25 am äußeren Umfang des Spannzylinders 21 den Deckel 15 von außen gegen die Welle 11. Um die äußeren Kugeln 25 in ihren Ausnehmungen des Spannzylinders 21 zu halten, ist ein über den Umfang umlaufener Dichtring 28 vorgesehen. Darüber hinaus ist zur besseren Handhabung am äußeren Ende des Spannzylinders 21 eine Rändelung angebracht.

In Fig. 3 ist im Querschnitt einer Fördertrommel 10 gezeigt, bei der eine Aufnahmebuchse 16 im Innern der Antriebswelle 11 ausgebildet ist, so dass die Kugeln 25 der Spanneinrichtung 20 im Inneren der Aufnahmebuchse 16 den Deckel 27 mit der Antriebswelle 11 verspannen.

Durch den Einsatz und die Verwendung einer erfindungsgemäßen Spanneinrichtung bei Fördereinrichtungen der tabakverarbeitenden Industrie wird ein einfacher und schneller Wechsel von Trommeln ermöglicht, wobei die bisherige Schraubverbindung und Befestigung von Trommeln durch einen Spannzylinder bzw. eine erfindungsgemäße Spanneinrichtung ersetzt werden.

### Bezugszeichenliste

- 10: Fördertrommel
- 11: Antriebswelle
- 12: Rotationsachse
- 13: Steuerkörper
- 14: Trommelkörper
- 15: Deckel
- 16: Aufnahmebuchse
- 20: Spanneinrichtung
- 21: Spannzylinder
- 22: Greifknopf
- 23: Drehbolzen
- 24: Kugel
- 25: Kugel
- 26: Aufnahmebuchse
- 27: Deckel
- 28: Dichtring

## Patentansprüche

1. Einrichtung (10) zum Transportieren von Artikeln der tabakverarbeitenden Industrie, insbesondere Zigaretten, mit einem drehend angetriebenen Förderelement (14), vorzugsweise Trommel, und einem Träger (11), wobei das Förderelement (14) mittels einer Spanneinrichtung (20) mit dem Träger (11) lösbar verbindbar ist, **dadurch gekennzeichnet, dass** die Spanneinrichtung (20) wenigstens ein Treibglied (23, 24) aufweist, so dass durch eine Bewegung des Treibglieds (23, 24) wenigstens zwei, vorzugsweise drei, Halteglieder (25) quer zur Bewegungsrichtung des Treibglieds (23, 24) ihre relative Lage zueinander ändern.

2. Einrichtung (10) nach Anspruch 1, **dadurch gekennzeichnet, dass** die Halteglieder (25) in einer Aufnahmebuchse (26, 16) des Trägers und/oder des Förderelements (14) einbringbar sind.

3. Einrichtung (10) nach Anspruch 1 oder 2, **dadurch gekennzeichnet, dass** das wenigstens eine Treibglied (23, 24) und die wenigstens zwei Halteglieder (25) in einem Gehäuse (21) angeordnet sind.

4. Einrichtung. (10) nach Anspruch 3, **dadurch gekennzeichnet, dass** das Gehäuse (21) als Zylinder, insbesondere Spannzylinder (21), ausgebildet ist.

5. Einrichtung (10) nach einem oder mehreren der Ansprüche 1 bis 4, **dadurch gekennzeichnet, dass** als Treibglied (23, 24) ein Bolzen (23), insbesondere Schraubbolzen, und/oder eine Kugel (24) vorgesehen sind.

6. Einrichtung (10) nach einem oder mehreren der Ansprüche 1 bis 5, **dadurch gekennzeichnet, dass** als Halteglieder (25) Kugeln (25) vorgesehen sind.

7. Einrichtung (10) nach einem oder mehreren der Ansprüche 1 bis 6, **dadurch gekennzeichnet, dass** die Spanneinrichtung (20) rotationssymmetrisch ausgebildet ist.

8. Einrichtung (10) nach einem oder mehreren der Ansprüche 1 bis 7, **dadurch gekennzeichnet, dass** die Spanneinrichtung (20) konzentrisch zur Drehachse (12) des Förderelements (14) angeordnet ist.

9. Einrichtung (10) nach einem oder mehreren der Ansprüche 1 bis 8, **dadurch gekennzeichnet, dass** die Spanneinrichtung (20) mit einem Greifknopf (22) versehen ist.

10. Einrichtung (10) nach einem oder mehreren der Ansprüche 1 bis 9, **dadurch gekennzeichnet, dass** das wenigstens eine Treibglied (23) mit einer Ausnehmung zur Aufnahme eines Drehwerkzeugs, insbesondere Sechskantschlüssel, versehen ist.

11. Einrichtung (10) nach einem oder mehreren der Ansprüche 1 bis 10, **dadurch gekennzeichnet, dass** die Spanneinrichtung (20) als Adapter ausgebildet ist.

12. Maschine der tabakverarbeitenden Industrie, insbesondere Filteransetzmaschine mit einer Einrichtung (10) nach einem oder mehreren der Ansprüche 1 bis 11.

13. Verwendung einer Spanneinrichtung in einer Einrichtung (10) zum Transportieren von Artikeln der tabakverarbeitenden Industrie, insbesondere Zigaretten, mit einem drehend angetriebenen Förderelement (14), vorzugsweise Trommel, und einem Träger (11), wobei das Förderelement (14) mittels der Spanneinrichtung (20) mit dem Träger lösbar verbindbar ist, **dadurch gekennzeichnet, dass** die Spanneinrichtung (20) wenigstens ein Treibglied (23, 24) aufweist, so dass durch eine Bewegung des Treibglieds (23, 24) wenigstens zwei, vorzugsweise drei, Halteglieder (25) quer zur Bewegungsrichtung des Treibglieds (23, 24) ihre relative Lage zueinander ändern.

14. Verwendung nach Anspruch 13, **dadurch gekennzeichnet, dass** die Halteglieder (25) in eine Aufnahmebuchse (26, 16) des Trägers und/oder des Förderelements (14) einbringbar sind.

15. Verwendung nach Anspruch 13 oder 14, **dadurch gekennzeichnet, dass** das wenigstens eine Treibglied (23, 24) und die wenigstens zwei Halteglieder (25) in einem Gehäuse (21) angeordnet sind.

16. Verwendung (10) nach Anspruch 15, **dadurch gekennzeichnet, dass** das Gehäuse (21) als Zylinder, insbesondere Spannzylinder (21), ausgebildet ist.

17. Verwendung nach einem oder mehreren der Ansprüche 13 bis 16, **dadurch gekennzeichnet, dass** als Treibglied (23, 24) ein Bolzen (23), insbesondere Schraubbolzen, und/oder eine Kugel (24) vorgesehen sind.

18. Verwendung (10) nach einem oder mehreren der Ansprüche 13 bis 17, **dadurch gekennzeichnet, dass** als Halteglieder (25) Kugeln (25) vorgesehen sind.

19. Verwendung nach einem oder mehreren der Ansprüche 13 bis 18, **dadurch gekennzeichnet, dass** die Spanneinrichtung (20) rotationssymmetrisch ausgebildet ist.

20. Verwendung nach einem oder mehreren der Ansprüche 13 bis 19, **dadurch gekennzeichnet, dass** die Spanneinrichtung (20) konzentrisch zur Drehachse (12) des Förderelements (14) angeordnet ist.

21. Verwendung nach einem oder mehreren der Ansprüche 13 bis 20, **dadurch gekennzeichnet, dass** die Spanneinrichtung (20) mit einem Greifkopf (22) versehen ist.

22. Verwendung nach einem oder mehreren der Ansprüche 13 bis 21, **dadurch gekennzeichnet, dass** das wenigstens eine Treibglied (23) mit einer Ausnehmung zur Aufnahme eines Drehwerkzeugs, insbesondere Sechskantschlüssel, versehen ist.

23. Verwendung nach einem oder mehreren der Ansprüche 13 bis 22, **dadurch gekennzeichnet, dass** die Spanneinrichtung (20) als Adapter ausgebildet ist.

## Claims

1. A device (10) for transporting articles of the tobacco-processing industry, particularly cigarettes, having a rotationally driven conveyor element (14), preferably a drum, and a carrier (11), the conveyor element (14) being detachably connectable to the carrier (11) by means of a clamping device (20), **characterised in that** the clamping device (20) has at least one driving element (23, 24) so that, as a result of a movement of the driving element (23, 24), at least two, preferably three, holding elements (25) alter their relative position to one another transversely to the movement direction of the driving element (23, 24).

2. A device (10) according to Claim 1, **characterised in that** the holding elements (25) may be positioned in a receiving bush (26, 16) of the carrier and/or the conveyor element (14).

3. A device (10) according to Claim 1 or 2, **characterised in that** the at least one driving element (23, 24) and the at least two holding elements (25) are arranged in a housing (21).

4. A device (10) according to Claim 3, **characterised in that** the housing (21) is constructed as a cylinder, particularly a clamping cylinder (21).

5. A device (10) according to one or more of Claims 1 to 4, **characterised in that** a bolt (23), particularly a screw bolt, and/or a ball (24) are provided as the driving element (23, 24).

6. A device (10) according to one or more of Claims 1 to 5, **characterised in that** balls (25) are provided as holding elements (25).

7. A device (10) according to one or more of Claims 1 to 6, **characterised in that** the clamping device (20) is of a rotationally symmetrical construction.

8. A device (10) according to one or more of Claims 1 to 7, **characterised in that** the clamping device (20) is arranged concentrically to the axis of rotation (12) of the conveyor element (14).

9. A device (10) according to one or more of Claims 1 to 8, **characterised in that** the clamping device (20) is provided with a gripping knob (22).

10. A device (10) according to one or more of Claims 1 to 9, **characterised in that** the at least one driving element (23) is provided with a cutout for receiving a rotary tool, particularly a spanner.

11. A device (10) according to one or more of Claims 1 to 10, **characterised in that** the clamping device (20) is constructed as an adapter.

12. A machine of the tobacco-processing industry, particularly a filter-attaching machine having a device (10) according to one or more of Claims 1 to 11.

13. A use for a clamping device in a device (10) for transporting articles of the tobacco-processing industry, particularly cigarettes, having a rotationally driven conveyor element (14), preferably a drum, and a carrier (11), the conveyor element (14) being detachably connectable to the carrier by means of the clamping device (20), **characterised in that** the clamping device (20) has at least one driving element (23, 24) so that, as a result of a movement of the driving element (23, 24), at least two, preferably three, holding elements (25) alter their relative position to one another transversely to the movement direction of the driving element (23, 24).

14. A use according to Claim 13, **characterised in that** the holding elements (24) may be positioned in a receiving bush (26, 16) of the carrier and/or the conveyor element (14).

15. A use according to Claim 13, or 14, **characterised in that** at the least one driving element (23, 24) and the at least two holding elements (25) are arranged in a housing (21).

16. A use (10) according to Claim 15, **characterised in that** the housing (21) is constructed as a cylinder, particularly a clamping cylinder (21).

17. A use according to one or more of Claims 13 to 16, **characterised in that** a bolt (23), particularly a screw bolt, and/or a ball (24) are provided as the driving element (23, 24).

18. A use (10) according to one or more of Claims 13 to 17, **characterised in that** balls (25) are provided as holding elements (25).

19. A use according to one or more of Claims 13 to 18, **characterised in that** the clamping device (20) is of a rotationally symmetrical construction.

20. A use according to one or more of Claims 13 to 19, **characterised in that** the clamping device (20) is arranged concentrically to the axis of rotation (12) of the conveyor element (14).

21. A use according to one or more of Claims 13 to 20, **characterised in that** the clamping device (20) is provided with a gripping knob (22).

22. A use according to one or more of Claims 13 to 21, **characterised in that** the at least one driving element (23) is provided with a cutout for receiving a rotary tool, particularly a spanner.

23. A use according to one or more of Claims 13 to 22, **characterised in that** the clamping device (20) is constructed as an adapter.

## Revendications

1. Dispositif (10) pour l'acheminement d'articles de l'industrie de transformation du tabac, en particulier de cigarettes, comportant un élément de transport (14), de préférence un tambour, entraîné en rotation, et un support (11), l'élément de transport (14) pouvant alors être relié, d'une façon démontable, au support (11), au moyen d'un dispositif de serrage (20), **caractérisé en ce que** le dispositif de serrage (20) présente au moins un organe pousseur (23, 24), de telle sorte que par suite d'un déplacement de l'organe pousseur (23, 24), au moins deux, de préférence trois, organes de retenue (25) voient leur positionnement relatif se modifier entre eux transversalement à la direction de déplacement de l'organe pousseur (23, 24).

2. Dispositif (10) selon la revendication 1, **caractérisé en ce que** les organes de retenue (25) peuvent s'introduire dans une douille de réception (26, 16) du support et/ou de l'élément de transport (14).

3. Dispositif (10) selon la revendication 1 ou 2, **caractérisé en ce que** le au moins un organe pousseur (23, 24) et les au moins deux organes de retenue (25) sont disposés dans un bâti (21).

4. Dispositif (10) selon la revendication 3, **caractérisé en ce que** le bâti (21) est réalisé sous forme d'un cylindre, en particulier d'un cylindre de serrage (21).

5. Dispositif (10) selon une ou plusieurs des revendications 1 à 4, **caractérisé en ce qu'**une tige (23), en particulier une tige filetée, et/ou une bille (24) sont prévues comme organe pousseur (23, 24).

6. Dispositif (10) selon une ou plusieurs des revendications 1 à 5, **caractérisé en ce que** des billes (25) sont prévues comme organes de retenue (25).

7. Dispositif (10) selon une ou plusieurs des revendications 1 à 6, **caractérisé en ce que** le dispositif de serrage (20) est doté d'une symétrie de révolution.

8. Dispositif (10) selon une ou plusieurs des revendications 1 à 7, **caractérisé en ce que** le dispositif de serrage (20) est disposé concentriquement à l'axe de rotation (12) de l'élément de transport (14).

9. Dispositif (10) selon une ou plusieurs des revendications 1 à 8, **caractérisé en ce que** le dispositif de serrage (20) est muni d'un bouton de préhension (22).

10. Dispositif (10) selon une ou plusieurs des revendications 1 à 9, **caractérisé en ce que** le au moins un organe pousseur (23) est pourvu d'un évidement destiné à recevoir un outil de déplacement en rotation, en particulier une clé à six pans.

11. Dispositif (10) selon une ou plusieurs des revendications 1 à 10, **caractérisé en ce que** le dispositif de serrage (20) est réalisé sous forme d'un adaptateur.

12. Machine de l'industrie de transformation du tabac, en particulier machine pour la pose de filtres, comportant un dispositif (10) selon une ou plusieurs des revendications 1 à 11.

13. Utilisation d'un dispositif de serrage dans un dispositif (10) pour l'acheminement d'articles de l'industrie de transformation du tabac, en particulier de cigarettes, comportant un élément de transport (14), de préférence un tambour, entraîné en rotation, et un support (11), l'élément de transport (14) pouvant alors être relié, d'une façon démontable, au support (11), au moyen du dispositif de serrage (20), **caractérisée en ce que** le dispositif de serrage (20) présente au moins un organe pousseur (23, 24), de telle sorte que par suite d'un déplacement de l'organe pousseur (23, 24), au moins deux, de préférence trois, organes de retenue (25) voient leur positionnement relatif se modifier entre eux transversalement à la direction de déplacement de l'organe pousseur (23, 24).

14. Utilisation selon la revendication 13, **caractérisée en ce que** les organes de retenue (25) peuvent s'introduire dans une douille de réception (26, 16) du support et/ou de l'élément de transport (14).

15. Utilisation selon la revendication 13 ou 14, **caractérisée en ce que** le au moins un organe pousseur (23, 24) et les au moins deux organes de retenue (25) sont disposés dans un bâti (21).

16. Utilisation (10) selon la revendication 15, **caractérisée en ce que** le bâti (21) est réalisé sous forme d'un cylindre, en particulier d'un cylindre de serrage (21).

17. Utilisation selon une ou plusieurs des revendications 13 à 16, **caractérisée en ce qu'**une tige (23), en particulier une tige filetée, et/ou une bille (24) sont prévues comme organe pousseur (23, 24).

18. Utilisation (10) selon une ou plusieurs des revendications 13 à 17, **caractérisée en ce que** des billes (25) sont prévues comme organes de retenue (25).

19. Utilisation selon une ou plusieurs des revendications 13 à 18, **caractérisée en ce que** le dispositif de serrage (20) est doté d'une symétrie de révolution.

20. Utilisation selon une ou plusieurs des revendications 13 à 19, **caractérisée en ce que** le dispositif de serrage (20) est disposé concentriquement à l'axe de rotation (12) de l'élément de transport (14).

21. Utilisation selon une ou plusieurs des revendications 13 à 20, **caractérisée en ce que** le dispositif de serrage (20) est muni d'un bouton de préhension (22).

22. Utilisation selon une ou plusieurs des revendications 13 à 21, **caractérisée en ce que** le au moins un organe pousseur (23) est pourvu d'un évidement destiné à recevoir un outil de déplacement en rotation, en particulier une clé à six pans.

23. Utilisation selon une ou plusieurs des revendications 13 à 22, **caractérisée en ce que** le dispositif de serrage (20) est réalisé sous forme d'un adaptateur.
